# EUROPÄISCHE PATENTSCHRIFT

(11) **EP 3 234 705 B1**
(45) Veröffentlichungstag und Bekanntmachung des Hinweises auf die Patenterteilung: **15.01.2020**
(21) Anmeldenummer: 15760417.4
(22) Anmeldetag: 27.08.2015
(51) Int. Cl.: G05B 17/02

(54) **BETRIEBSVERFAHREN FÜR EINE HÜTTENTECHNISCHE ANLAGE MIT OPTIMIERUNG DER BETRIEBSWEISE**
OPERATING METHOD FOR A METALLURGICAL PLANT WITH OPTIMIZATION OF THE OPERATING MODE
PROCÉDÉ DE FONCTIONNEMENT D'UNE INSTALLATION MÉTALLURGIQUE À FONCTIONNEMENT OPTIMISÉ

(30) Priorität: 17.12.2014 EP 14198458
(43) Veröffentlichungstag der Anmeldung: 25.10.2017
(73) Patentinhaber: Primetals Technologies Austria GmbH, 4031 Linz (AT)
(72) Erfinder: KUEHAS, Thomas, A-4225 Luftenberg (AT); ROHRHOFER, Andreas, A-4020 Linz (AT); WEINZINGER, Michael, A-4501 Neuhofen an der Krems (AT); FISCHER, Paul, A-4040 Linz (AT); HARTL, Franz, A-4720 Kallham (AT); KARNITSCH-EINBERGER, Eberhard, AT-4020 Linz (AT); SCHWARZ, Werner, A-4772 Lambrechten (AT); STOHL, Klaus, A-4040 Gramastetten (AT)
(74) Vertreter: Metals@Linz
(86) Internationale Anmeldenummer: PCT/EP2015/069583
(87) Internationale Veröffentlichungsnummer: WO 2016/096169

(56) Entgegenhaltungen:
- DE-A1- 10 306 273
- US-A1- 2007 250 215
- US-A1- 2012 053 909

## Beschreibung

Die vorliegende Erfindung geht aus von einem Betriebsverfahren für eine hüttentechnische Anlage, die mindestens einen ersten Anlagenteil aufweist,
- wobei der erste Anlagenteil zu einem bestimmten Zeitpunkt mit ersten und zweiten Betriebsparametern betrieben wird,
- wobei ein sich aufgrund des Betriebs des ersten Anlagenteils entsprechend den ersten und zweiten Betriebsparametern einstellendes Betriebsergebnis erfasst wird.
Hüttentechnische Anlagen werden in automatisierungstechnischer Hinsicht in der Regel als geschlossene Einheiten betrieben. Die jeweilige Anlage wird vom Hersteller der Anlage beim Kunden (= Anlagenbetreiber) installiert, während der Inbetriebnahme optimiert und sodann an den Kunden übergeben. Nach der Übergabe an den Kunden erfolgt entweder keinerlei weitergehende Optimierung des Betriebs der hüttentechnischen Anlage oder eine derartige Optimierung erfolgt in einem zeitlichen Abstand von mehreren Jahren, wenn die Anlage insgesamt gewartet und generalüberholt wird.

Das Dokument US2007/250215 A1 offenbart ein Betriebsverfahren für ein Kraftwerk, wobei von einer Steuereinrichtung für das Kraftwerk mit einem Zeittakt im Sekundenbereich Betriebsgrößen des Kraftwerks erfasst werden und an eine Recheneinheit übermittelt werden. Die Recheneinheit ermittelt im gleichen Zeittakt anhand der übermittelten Betriebsgrößen optimale Betriebsparameter und übermittelt die optimalen Betriebsparameter zurück an die Steuereinrichtung. Die Steuereinrichtung übernimmt die optimalen Betriebsparameter und steuert das Kraftwerk entsprechend.

Im Stand der Technik besteht im laufenden Betrieb der hüttentechnischen Anlage in der Regel kein Kontakt zwischen dem Hersteller und dem Betreiber der hüttentechnischen Anlage. Im Problemfall ist es zwar möglich, dass der Anlagenbetreiber aufgrund einer von ihm aktiv ergriffene Maßnahme Messwerte an den Hersteller übermittelt und von diesem eine Auswertung erbittet. Eine derartige Auswertung und Analyse dauert jedoch lange. Oftmals ist sogar eine persönliche Reise von Spezialisten zur hüttentechnischen Anlage erforderlich. Diese Vorgehensweise ist daher in der Praxis mit erheblichem Aufwand verbunden und wird daher oftmals nicht ergriffen.

Der Betrieb hüttentechnischer Anlagen bzw. von deren Anlagenteilen wie beispielsweise Hochofen, Lichtbogenofen, Stahlwerk, Sinteranlage, Stranggießanlage usw. erfolgt in der Regel hochautomatisiert. Der jeweilige Anlagenteil wird von einer jeweiligen Steuereinrichtung gesteuert, welche den jeweiligen Anlagenteil gemäß einem jeweiligen Fahrdiagramm betreibt. Das Fahrdiagramm legt also die Betriebsweise bzw. genauer die Abfolge der einzelnen Betriebsweisen des jeweiligen Anlagenteils fest. Jeder einzelne Betriebszustand des jeweiligen Anlagenteils ist gekennzeichnet durch eine Anzahl von Betriebsparametern. Manche dieser Betriebsparameter sind durch den gewünschten Betrieb des jeweiligen Anlagenteils festgelegt. Bei einem Lichtbogenofen soll beispielsweise Stahl einer bestimmten Zusammensetzung erzeugt werden. Bei einer Vakuumbehandlungsanlage soll beispielsweise die Zusammensetzung des Stahls gezielt beeinflusst werden. Derartige Betriebsparameter sind erste Betriebsparameter im Sinne der vorliegenden Erfindung. Andere dieser Betriebsparameter können frei oder innerhalb gewisser Grenzen variiert werden. Bei einem Lichtbogenofen können beispielsweise der Elektrodenabstand und die Betriebsspannung oder der Betriebsstrom eingestellt werden. Mit der Betriebsspannung und dem Betriebsstrom ist die Dauer der Schmelzphasen gekoppelt. Derartige Betriebsparameter sind zweite Betriebsparameter im Sinne der vorliegenden Erfindung. Das Fahrdiagramm umfasst jeweils Gruppen von Betriebsparametern, die zusammen jeweils eine Betriebsweise des jeweiligen Anlagenteils definieren. Jede Gruppe von Betriebsparametern umfasst die zusammengehörigen ersten und zweiten Betriebsparameter. Die Gruppen von Betriebsparametern können eine Zustandsabfolge - beispielsweise als Zeitdiagramm oder als einfache Sequenz ohne Zuordnung fester Zeiten - oder eine einfache Liste bilden.

Die Vorgehensweise des Standes der Technik führt in der Praxis beim Betrieb der Anlage zu ordnungsgemäßen Ergebnissen. Ordnungsgemäß bedeutet in diesem Zusammenhang, dass mittels der jeweiligen hüttentechnischen Anlage das gewünschte Produkt hergestellt wird und dass zwingend einzuhaltende technische Randbedingungen wie beispielsweise Umweltschutzvorschriften eingehalten werden. Die Vorgehensweise des Standes der Technik führt jedoch insbesondere dann, wenn sich äußere Umstände dynamisch ändern, nicht stets zu einer optimalen Betriebsweise der hüttentechnischen Anlage.

Es ist bekannt, Prozessdaten und Messdaten der hüttentechnischen Anlage zu sammeln und nach Bedarf an eine externe Recheneinheit weiterzuleiten. Dort werden die übermittelten Daten intellektuell von einem Menschen oder automatisiert durch die Recheneinheit ausgewertet. Anhand der Auswertung wird ein Report erstellt, der an den Anlagenbetreiber übermittelt wird. Eine direkte prozessbeeinflussende Übermittlung von Daten an die Steuereinrichtung der hüttentechnischen Anlage (oder eines Anlagenteils) ist hingegen nicht üblich. Es ist jedoch bekannt, dass innerhalb der Steuereinrichtung der hüttentechnischen Anlage (oder eines Anlagenteils) mehrere Sollwertsätze hinterlegt sind, von denen vom Bedienpersonal jeweils einer ausgewählt wird.

Die Aufgabe der vorliegenden Erfindung besteht darin, Möglichkeiten zu schaffen, mittels derer der Betrieb der hüttentechnischen Anlage kontinuierlich optimiert werden kann.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 15.

Ein Betriebsverfahren der eingangs genannten Art wird derart ausgestaltet,
- dass zumindest das Betriebsergebnis von einer Steuereinrichtung des ersten Anlagenteils an eine Recheneinheit übermittelt wird,
- dass die Recheneinheit die zweiten Betriebsparameter, nicht aber die ersten Betriebsparameter variiert und dadurch den ersten Betriebsparametern zugeordnete variierte zweite Betriebsparameter ermittelt,
- dass die Recheneinheit die variierten zweiten Betriebsparameter an die Steuereinrichtung des ersten Anlagenteils zurück übermittelt und
- dass die Steuereinrichtung des ersten Anlagenteils ab der Übermittlung der variierten zweiten Betriebsparameter dann, wenn sich die ersten Betriebsparameter einstellen, die variierten zweiten Betriebsparameter verwendet.

Die Art der Datenübermittlung zwischen der Steuereinrichtung des ersten Anlagenteils und der Recheneinheit kann nach Bedarf drahtgebunden oder drahtlos sein.

Durch die erfindungsgemäße Vorgehensweise wird es möglich, den Betrieb des ersten Anlagenteils kontinuierlich an sich ändernde Umstände anzupassen und den Betrieb kontinuierlich zu optimieren. Die Optimierung kann in verschiedener Hinsicht erfolgen. Insbesondere ist es möglich, den Betrieb des ersten Anlagenteils hinsichtlich einer Minimierung des Energiebedarfs, des CO2-Ausstoßes, des Anfallens von Neben- oder Abfallprodukten oder des Bedarfs an Rohstoffen bzw. allgemein hinsichtlich der Betriebskosten vorzunehmen. Auch Kombinationen dieser Kriterien sind möglich.

Vorzugsweise ist vorgesehen, dass die Recheneinheit die variierten zweiten Betriebsparameter anhand eines Modells des ersten Anlagenteils unter Berücksichtigung der ersten Betriebsparameter und/oder der zweiten Betriebsparameter und des Betriebsergebnisses ermittelt. Dadurch kann eine besonders zuverlässige Vorhersage des sich durch das Variieren der zweiten Betriebsparameter ergebenden Betriebsergebnisses erfolgen.

Es ist möglich, dass der Recheneinheit die ersten Betriebsparameter und/oder die zweiten Betriebsparameter a priori bekannt sind. Alternativ ist es möglich, dass die genannten Betriebsparameter von der Steuereinheit des ersten Anlagenteils an die Recheneinheit übermittelt werden.

In aller Regel führt die Recheneinheit eine Optimierung der zweiten Betriebsparameter durch. Beispielsweise ist es möglich, dass die Recheneinheit zumindest die zweiten Betriebsparameter in eine Kostenfunktion einsetzt und die variierten zweiten Betriebsparameter dadurch ermittelt, dass bei den entsprechend variierten zweiten Betriebsparametern ein Optimum der Kostenfunktion erreicht wird. Die Berücksichtigung des Betriebsergebnisses kann dadurch erfolgen, dass die Recheneinheit durch Einsetzen der ersten und zweiten Betriebsparameter in das Modell ein zugehöriges erwartetes Betriebsergebnis ermittelt und im Rahmen der Optimierung der Kostenfunktion für das Betriebsergebnis einzuhaltende Randbedingungen berücksichtigt und/oder auch das erwartete Betriebsergebnis in die Kostenfunktion einsetzt. Die Optimierung kann beispielsweise im Ergebnis eine Kostenoptimierung sein, beispielsweise durch Optimierung des Energieverbrauchs oder des Rohstoffeinsatzes.

Änderungen können sich in einem derartigen Fall beispielsweise auch durch ein Variieren der Kostenfunktion als solcher ergeben. Wenn sich beispielsweise die Kosten für alternativ verwendbare Rohstoffe (die in diesem Fall den zweiten Betriebsparametern entsprechen) ändern, kann sich unter Umständen auch ein Optimum des Rohstoffmixes ändern. Analoge Ausführungen gelten für den Fall, dass sich die Kosten für die Verwertung von Nebenprodukten oder die Entsorgung von Abfallprodukten ändern. Alternativ können sich Änderungen beispielsweise durch ein Variieren des Modells als solchem ergeben. Wenn ein modifiziertes Modell den realen ersten Anlagenteil besser modelliert, kann auch eine verbesserte Ermittlung der zweiten Betriebsparameter erfolgen. Auch ist es möglich, dass sich einzuhaltende Randbedingungen - beispielsweise Umweltschutzvorschriften - ändern und dadurch eine andere Optimierung der zweiten Betriebsparameter erfolgen kann, soll oder muss.

Die Erfassung der Betriebsergebnisse sowie, soweit erforderlich, der ersten und zweiten Betriebsparameter durch die Steuereinrichtung des ersten Anlagenteils erfolgt vorzugsweise kontinuierlich. Die Übermittlung der genannten Größen an die Recheneinheit kann ebenfalls kontinuierlich erfolgen. Alternativ kann sie diskontinuierlich erfolgen. Im letztgenannten Fall puffert die Steuereinrichtung des ersten Anlagenteils die erfassten Betriebsergebnisse sowie, soweit erforderlich, die ersten und zweiten Betriebsparameter, bis eine Übermittlung an die Recheneinheit erfolgt.

In umgekehrter Weise nimmt die Steuereinrichtung des ersten Anlagenteils an sie übermittelte variierte zweite Betriebsparameter zunächst lediglich entgegen und puffert sie. Dadurch kann insbesondere erreicht werden, dass die variierten zweiten Betriebsparameter in mehreren Paketen nach und nach an die Steuereinrichtung des ersten Anlagenteils übermittelt werden. Eine Übernahme in dem Sinne, dass die Steuereinrichtung die entgegengenommenen und gepufferten variierten zweiten Betriebsparameter tatsächlich verwendet, erfolgt hingegen nur dann, wenn die variierten zweiten Betriebsparameter vollständig und korrekt an die Steuereinrichtung übermittelt worden sind.

Vorzugsweise überprüft die Steuereinrichtung des ersten Anlagenteils die gepufferten zweiten Betriebsparameter auf Plausibilität. Die Steuereinrichtung des ersten Anlagenteils übernimmt die gepufferten zweiten Betriebsparameter als neue zweite Betriebsparameter, sofern die gepufferten zweiten Betriebsparameter die Plausibilitätsprüfung bestehen. Anderenfalls verwirft sie die gepufferten zweiten Betriebsparameter, verwendet also weiter die zuvor gültigen zweiten Betriebsparameter. Durch diese Vorgehensweise ist insbesondere gewährleistet, dass auch im Falle einer fehlerhaften Ermittlung der variierten zweiten Betriebsparameter durch die Recheneinheit ein ordnungsgemäßer Betrieb der hüttentechnischen Anlage aufrechterhalten bleibt.

Die Plausibilitätsprüfung kann nach Bedarf ausgestaltet sein. Im einfachsten Fall besteht die Plausibilitätsprüfung darin, dass geprüft wird, ob eine Abweichung der gepufferten zweiten Betriebsparameter von den zweiten Betriebsparametern innerhalb einer vordefinierten Schranke liegt.

Der Recheneinheit kann die vordefinierte Schranke bekannt sein. Falls im Sinne einer Optimierung der zweiten Betriebsparameter ein Variieren der zweiten Betriebsparameter um mehr als die vordefinierte Schranke erforderlich ist, kann ein derartiges Variieren dadurch realisiert werden, dass die zweiten Betriebsparameter in Zwischenschritten variiert werden.

Das Betriebsergebnis wird immer wieder erfasst. Vorzugsweise wird die gesamte Sequenz der erfassten Betriebsergebnisse an die Recheneinheit übermittelt. Falls im Rahmen der Übermittlung auch die ersten und/oder zweiten Betriebsparameter an die Recheneinheit übermittelt werden, gilt dies auch für die Sequenz der ersten und/oder zweiten Betriebsparameter.

Weiterhin gibt die Steuereinrichtung mit einem Steuertakt jeweils die jeweils aktuellen zweiten Betriebsparameter (und eventuell auch die jeweils aktuellen ersten Betriebsparameter) an gesteuerte Elemente des ersten Anlagenteils aus. Vorzugsweise erfasst die Steuereinrichtung des ersten Anlagenteils zumindest das Betriebsergebnis mit dem Steuertakt oder einem ganzzahligen Vielfachen des Steuertaktes.

Vorzugsweise erfolgt nicht nur die Erfassung der Betriebsergebnisse und der ersten und zweiten Betriebsparameter kontinuierlich, sondern auch die Übermittlung der Betriebsergebnisse und, soweit erforderlich, der ersten und/oder zweiten Betriebsparameter an die Recheneinheit. Die Übermittlung der variierten zweiten Betriebsparameter an die Steuereinrichtung des ersten Anlagenteils kann hingegen in einem größeren Zeitabstand erfolgen.

Der Zeitabstand zwischen jeweils einer erneuten Übermittlung der variierten zweiten Betriebsparameter kann nach Bedarf zwischen mehreren Stunden und mehreren Monaten liegen. Oftmals liegt der Zeitabstand zwischen 2 Tagen und 30 Tagen, vorzugsweise zwischen 5 Tagen und 10 Tagen, insbesondere bei 6 bis 8 Tagen. Die Übermittlung der variierten zweiten Betriebsparameter kann insbesondere in unregelmäßigen Zeitabständen erfolgen.

Vorzugsweise kommunizieren die Steuereinrichtung des ersten Anlagenteils und die Recheneinheit über eine nicht proprietäre universelle Datenverbindung miteinander. Mit einer nicht proprietären universellen Datenverbindung ist gemeint, dass die Datenverbindung nicht dediziert für die beiden Komponenten eingerichtet ist, sondern allgemein besteht und von beliebigen anderen Einheiten ebenfalls genutzt werden kann. Beispiele entsprechender Datenverbindungen sind das Telefon-Festnetz, Mobilfunknetze für Telefon und/oder Daten (Beispiele: GSM-Standard oder UTMS-Standard), ein LAN, ein WLAN, eine Bluetooth-Verbindung und insbesondere auch das Internet.

Der erste Anlagenteil kann nach Bedarf ausgestaltet sein. Beispielsweise ist es möglich, dass der erste Anlagenteil ein elektrostatischer Staubfilter mit mehreren hintereinandergeschalteten Filterkammern ist. In diesem Fall wird dem elektrostatischen Staubfilter ein staubbelastetes Abgas zugeführt, das in den Filterkammern entstaubt wird und als gereinigtes Abgas vom elektrostatischen Staubfilter abgegeben wird. Der erste Betriebsparameter ist in diesem Fall entweder der Betriebszustand eines dem elektrostatischen Staubfilter vorgeordneten Aggregats oder ein Mengenstrom und/oder Belastungsgrad des dem elektrostatischen Staubfilter zugeführten staubbelasteten Abgases. Die zweiten Betriebsparameter sind in diesem Fall elektrische Größen der einzelnen Filterkammern des elektrostatischen Staubfilters. Das Betriebsergebnis ist in diesem Fall der Reinheitsgrad des gereinigten Abgases.

Die hüttentechnische Anlage weist oftmals zusätzlich zu dem ersten Anlagenteil auch einen zweiten Anlagenteil auf. In diesem Fall ist es selbstverständlich möglich, ein erfindungsgemäßes Betriebsverfahren auch für den zweiten Anlagenteil der hüttentechnischen Anlage durchzuführen. Es ist weiterhin möglich, dass der erste und der zweite Anlagenteil voneinander entkoppelt sind. Alternativ ist es möglich dass die beiden Anlagenteile derart miteinander gekoppelt sind, dass ein Ausgangsprodukt des ersten Anlagenteils ein Eingangsprodukt des zweiten Anlagenteils ist. Die Steuereinrichtung des zweiten Anlagenteils ist eine von der Steuereinrichtung des ersten Anlagenteils verschiedene Einrichtung. Die Recheneinheit zur Ermittlung der variierten zweiten Betriebsparameter für den ersten Anlagenteil ist jedoch vorzugsweise mit der Recheneinheit zur Ermittlung der variierten zweiten Betriebsparameter für den zweiten Anlagenteil identisch. Dadurch ist es möglich, eine gemeinsame Optimierung der zweiten Betriebsparameter für die beiden Anlagenteile vorzunehmen. Die entsprechende Vorgehensweise ist selbstverständlich auch auf mehr als zwei Anlagenteile erweiterbar.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine hüttentechnische Anlage,
- FIG 2: ein elektrostatischer Staubfilter,
- FIG 3: mehrere Anlagenteile, die zugehörigen Steuereinrichtungen und deren Vernetzung mit einer Recheneinheit,
- FIG 4: mehrere Betriebszustände eines Anlagenteils,
- FIG 5: ein Ablaufdiagramm,
- FIG 6: ein weiteres Ablaufdiagramm,
- FIG 7: ein Zeitdiagramm und
- FIG 8: ein Ablaufdiagramm.

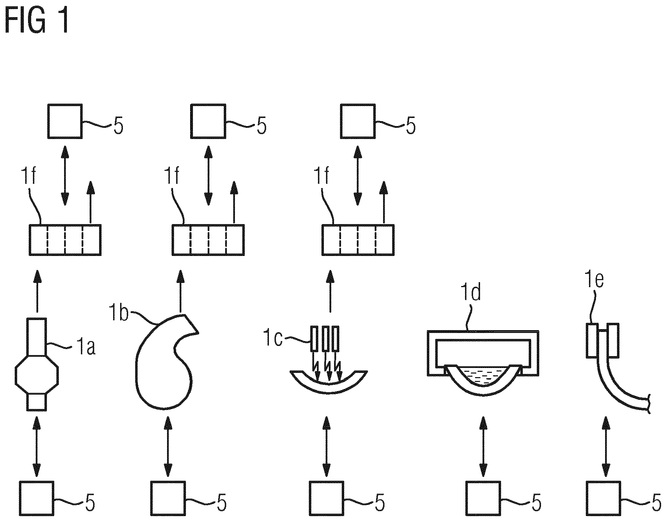

Gemäß FIG 1 weist eine hüttentechnische Anlage eine Mehrzahl von Anlagenteilen 1 auf. Beispielsweise kann die hüttentechnische Anlage einen Hochofen 1a, einen Konverter 1b, einen Lichtbogenofen 1c, eine Vakuumbehandlungsanlage 1d oder eine Stranggießanlage 1e umfassen. Die Anlagenteile 1 wirken zusammen. So wird beispielsweise im Hochofen 1a erzeugtes Roheisen dem Konverter 1b zugeführt und dort in Stahl umgewandelt. Im Konverter 1b oder im Lichtbogenofen 1c erzeugter Stahl wird der Vakuumbehandlungsanlage 1d zugeführt und dort metallurgisch behandelt. Sodann wird der Stahl der Stranggießanlage 1e zugeführt, in der er zu einem Stahlstrang vergossen wird. Die in FIG 1 dargestellten Anlagenteile 1 sind nur beispielhaft. Es können ebenso auch andere oder zusätzlich weitere Anlagenteile 1 vorhanden sein.

Soweit nachfolgend die Anlagenteile 1 und deren Betriebsweise lediglich allgemein behandelt werden, wird für die Anlagenteile das generische Bezugszeichen 1 verwendet. Soweit konkret auf bestimmte der Anlagenteile 1 Bezug genommen wird, wird konkret das mit dem jeweiligen Kleinbuchstaben ergänzte Bezugszeichen verwendet, beispielsweise im Falle des Lichtbogenofens das Bezugszeichen 1c.

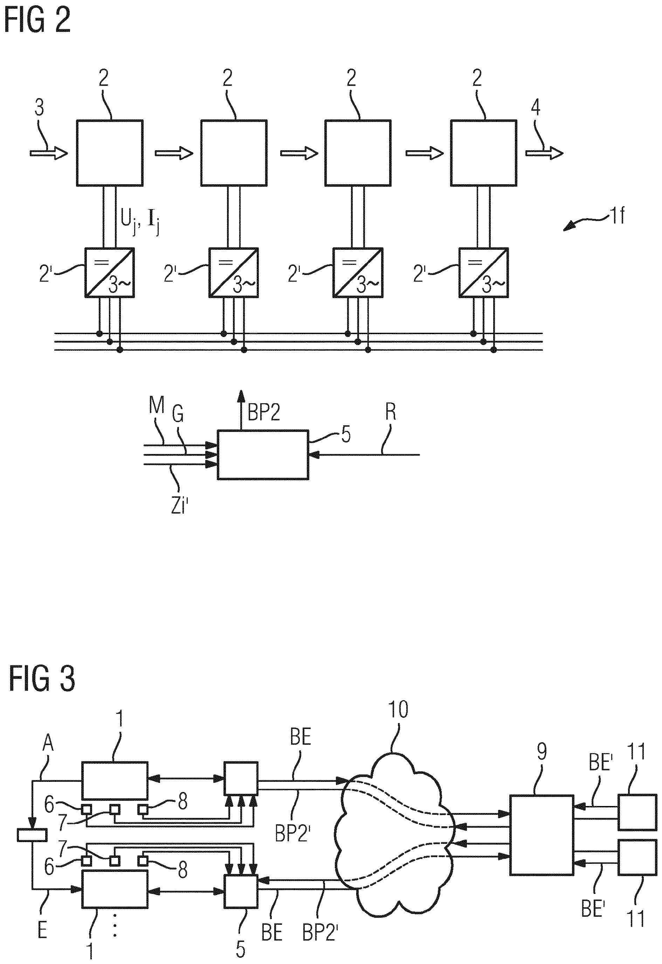

Manchen der Anlagenteile 1 - insbesondere dem Hochofen 1a, dem Konverter 1b und dem Lichtbogenofen 1c, unter Umständen jedoch auch anderen Anlagenteilen 1 - ist weiterhin ein elektrostatischer Staubfilter 1f nachgeordnet. Auch die elektrostatischen Staubfilter 1f sind Anlagenteile 1 im Sinne der vorliegenden Erfindung. Die Staubfilter 1f bestehen gemäß FIG 2 aus mehreren Filterkammern 2. Die Filterkammern 2 sind hintereinander geschaltet. Dem jeweiligen Staubfilter 1f wird staubbelastetes Abgas 3 zugeführt. Das staubbelastete Abgas 3 wird sequenziell nacheinander durch die Filterkammern 2 geführt, dort immer weiter entstaubt und schließlich als gereinigtes Abgas 4 abgegeben. Die Abgabe erfolgt in der Regel an die Umwelt. Der Aufbau und die Wirkungsweise eines elektrostatischen Staubfilters ist Fachleuten allgemein bekannt und muss daher nicht näher erläutert werden.

Die Filterkammern 2 werden über Stromversorgungseinrichtungen 2' mit elektrischer Energie versorgt, insbesondere mit einer jeweiligen Betriebsspannung Uj (j = 1, 2, ...) und einem jeweiligen Betriebsstrom Ij. Die Stromversorgungseinrichtungen 2' sind in der Regel als Zwischenkreisumrichter mit nachgeordnetem Hochspannungstransformator und diesen nachgeordneten Gleichrichter ausgebildet.

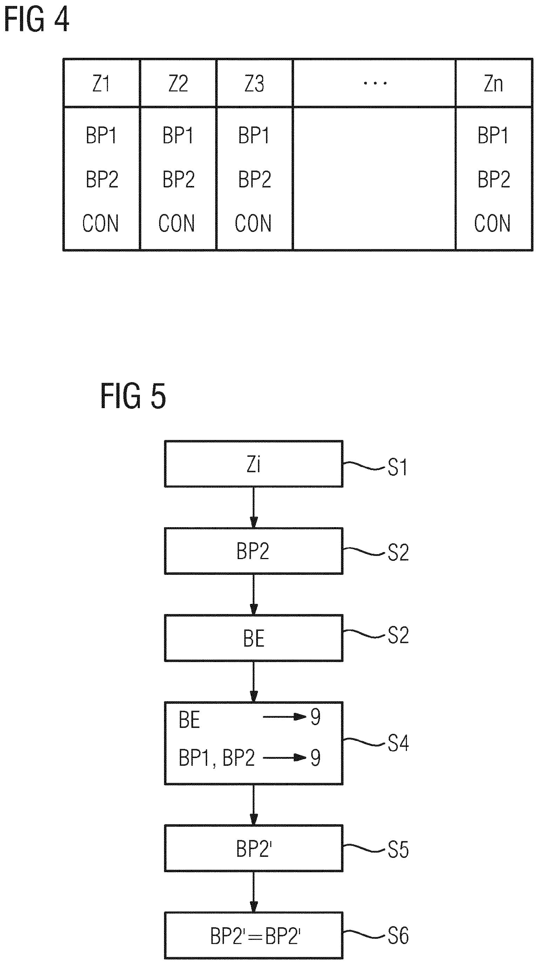

Die Anlagenteile 1 werden gemäß den FIG 1 bis 3 von einer jeweiligen Steuereinrichtung 5 gesteuert. Insbesondere werden die Anlagenteile 1 von der jeweiligen Steuereinrichtung 5 in der Regel nacheinander in einer Abfolge von Betriebszuständen Zi (i = 1, 2, 3, ...) betrieben. Jeder Betriebszustand Zi ist gemäß FIG 4 durch jeweilige erste Betriebsparameter BP1, zweite Betriebsparameter BP2 und eine Zustandsbedingung CON definiert. Die Liste der Betriebszustände Zi ist innerhalb der jeweiligen Steuereinrichtung 5 als verkettete oder unverkettete Liste gespeichert. Die Begriffe "erste Betriebsparameter" und "zweite Betriebsparameter" werden im generischen Sinne verwendet. Es kann sich jeweils alternativ um einzelne Werte oder um Gruppen von Werten handeln.

Die jeweiligen ersten Betriebsparameter BP1 können von der jeweiligen Steuereinrichtung 5 nicht geändert oder eingestellt werden. Es handelt sich um Parameter, welche von außen - also ohne Mitwirkung der jeweiligen Steuereinrichtung 5 - eingestellt werden. Bei einem Konverter 1b kann es sich beispielsweise um die Menge an Roheisen handeln, mit welcher der Konverter 1b gefüllt ist. Bei einem Lichtbogenofen 1c kann es sich beispielsweise um die Menge an Schrott handeln, mit welcher der Lichtbogenofen 1c beschickt wird. Bei einer Vakuumbehandlungsanlage 1d kann es sich beispielsweise um die Menge und die Temperatur des Stahls handeln, mit welcher die Vakuumbehandlungsanlage 1d beschickt wird. Bei einer Stranggießanlage 1e kann es sich beispielsweise um das Gießformat handeln. Bei einem elektrostatischen Staubfilter 1f kann es sich beispielsweise um den Mengenstrom M und/oder den Belastungsgrad G des dem elektrostatischen Staubfilter 1f zugeführten staubbelasteten Abgases 3 handeln. Alternativ kann der erste Betriebsparameter BP1 bei einem elektrostatischen Staubfilter 1f der Betriebszustand Zi' eines dem elektrostatischen Staubfilter 1f vorgeordneten Aggregats 1a bis 1d sein. Dieser Betriebszustand Zi' kann, nicht aber muss soweit detailliert spezifiziert sein wie der Betriebszustand Zi. Es reicht unter Umständen aus, den Betriebszustand Zi des vorgeordneten Aggregats als solchen zu spezifizieren, also beispielsweise dass es sich bei einem Konverter 1b um eine Blasephase handelt, ohne die Betriebsparameter der Blasephase im Detail zu spezifizieren.

Die jeweiligen zweiten Betriebsparameter BP2 können von der jeweiligen Steuereinrichtung 5 eingestellt werden. Bei einem Konverter 1b kann es sich beispielsweise um die Zeitdauer und die Intensität handeln, mit welcher Sauerstoff auf die im Konverter 1b befindliche Schmelze geblasen wird. Bei einem Lichtbogenofen 1c kann es sich beispielsweise um die Positionierung der Elektroden des Lichtbogenofens 1c und deren Betriebsströme oder Betriebsspannungen handeln. Bei einer Vakuumbehandlungsanlage 1d kann es sich beispielsweise um die Menge an Zuschlagstoffen handeln, mit denen die Vakuumbehandlungsanlage 1d beschickt wird. Bei einer Stranggießanlage 1e kann es sich beispielsweise um die Gießgeschwindigkeit handeln. Bei einem elektrostatischen Staubfilter 1f kann es sich beispielsweise um die elektrischen Größen Uj, Ij der einzelnen Filterkammern 2 des elektrostatischen Staubfilters 1f handeln, insbesondere um die Betriebsspannungen Uj oder Betriebsströme Ij. Es kann sich bei den zweiten Betriebsparameter BP2 auch um Betriebsparameter im weiteren Sinne handeln, beispielsweise um die Parametrierung eines Reglers, über den ein Sollwert in eine den Betrieb des jeweiligen Anlagenteils 1 beeinflussende Stellgröße umgesetzt wird.

Zum Einstellen der jeweiligen zweiten Betriebsparameter BP2 bestimmt die jeweilige Steuereinrichtung 5 gemäß FIG 5 zunächst in einem Schritt S1 den jeweiligen Betriebszustand Zi. Sodann bestimmt sie die diesem Betriebszustand Zi zugeordneten zweiten Betriebsparameter BP2 und steuert den jeweiligen Anlagenteil 1 entsprechend.

Aufgrund des Betriebs des jeweiligen ersten Anlagenteils 1 stellt sich ein jeweiliges Betriebsergebnis BE ein. Bei einem Hochofen 1a kann es sich beispielsweise um die Menge an anfallendem Roheisen und dessen Temperatur handeln. Bei einem Konverter 1b und einem Lichtbogenofen 1c kann es sich um die Menge an anfallendem Stahl und dessen Temperatur handeln. Bei einer Vakuumbehandlungsanlage 1d kann es sich beispielsweise um die chemische Zusammensetzung des Stahls beim Verlassen der Vakuumbehandlungsanlage 1d handeln. Bei einem Staubfilter 1f kann es sich insbesondere um den Reinheitsgrad R des gereinigten Abgases 4 handeln. Das jeweilige Betriebsergebnis BE wird mittels entsprechender Sensoren 6 in an sich bekannter Weise erfasst und der jeweiligen Steuereinrichtung 5 zugeführt. Die Steuereinrichtung 5 nimmt das jeweilige Betriebsergebnis BE gemäß FIG 5 in einem Schritt S3 entgegen. Analog zu den Begriffen "erste Betriebsparameter" und "zweite Betriebsparameter" wird auch der Begriff "Betriebsergebnisse" im generischen Sinne verwendet. Es kann sich alternativ um einzelne Werte oder um Gruppen von Werten handeln.

Es ist möglich, dass die jeweiligen ersten Betriebsparameter BP1 von der jeweiligen Steuereinrichtung 5 mittels entsprechender Sensoren 7 ebenfalls messtechnisch erfasst werden. Alternativ ist es möglich, dass die jeweiligen ersten Betriebsparameter BP1 der jeweiligen Steuereinrichtung 5 anderweitig bekannt sind. Ob die jeweiligen ersten Betriebsparameter BP1 der jeweiligen Steuereinrichtung 5 auf die eine oder auf die andere Weise bekannt sind, ist im Rahmen der vorliegenden Erfindung von untergeordneter Bedeutung. Es ist weiterhin möglich, dass die jeweiligen zweiten Betriebsparameter BP2 (genauer: deren Istwerte) von der jeweiligen Steuereinrichtung 5 mittels entsprechender Sensoren 8 ebenfalls messtechnisch erfasst werden. Alternativ ist es möglich, dass der jeweiligen Steuereinrichtung 5 die jeweiligen zweiten Betriebsparameter BP2 aufgrund des Zustands Zi als solchem bekannt sind.

Die jeweilige Steuereinrichtung 5 übermittelt in einem Schritt S4 zumindest das jeweilige Betriebsergebnis BE des jeweiligen Anlagenteils 1 an eine Recheneinheit 9. Vorzugsweise übermittelt die jeweilige Steuereinrichtung 5 im Rahmen des Schrittes S4 auch zumindest die jeweiligen zweiten Betriebsparameter BP2 an die Recheneinheit 9. Soweit erforderlich, kann die jeweilige Steuereinrichtung 5 im Rahmen des Schrittes S4 weiterhin auch die jeweiligen ersten Betriebsparameter BP1 an die Recheneinheit 9 übermitteln.

Die Übermittlung des jeweiligen Betriebsergebnisses BE (und gegebenenfalls auch der ersten und/oder zweiten Betriebsparameter BP1, BP2) erfolgt gemäß FIG 3 über eine nicht proprietäre universelle Datenverbindung 10. Die Datenverbindung 10 kann beispielsweise ein LAN, ein WLAN, ein Telefon-Mobilfunknetz oder das Internet sein. Entscheidend ist, dass die Datenverbindung 10 in ihrer Hardwarestruktur nicht eigens für die Kommunikation zwischen der jeweiligen Steuereinrichtung 5 und der Recheneinheit 3 aufgebaut wird, sondern sowieso vorhanden ist und von vielen anderen Teilnehmern genutzt werden kann und in der Regel auch genutzt wird.

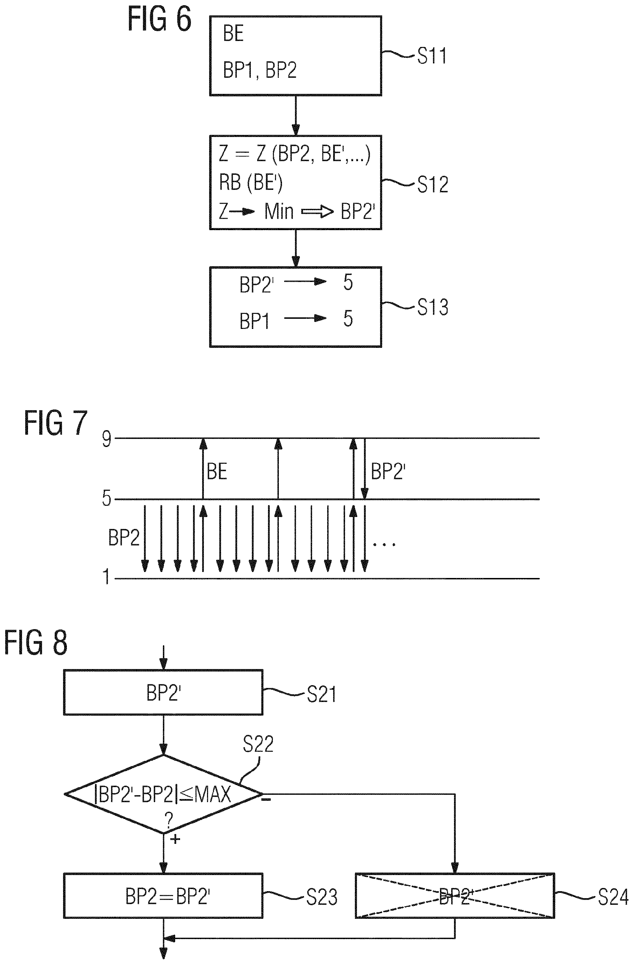

Die Recheneinheit 9 nimmt gemäß FIG 6 das von der jeweiligen Steuereinrichtung 5 an sie übermittelte Betriebsergebnis BE (und gegebenenfalls auch die zugehörigen ersten und/oder zweiten Betriebsparameter BP1, BP2) in einem Schritt S11 entgegen. Falls der Recheneinheit 9 die ersten und/oder die zweiten Betriebsparameter BP1, BP2 a priori bekannt sind, kann die Übermittlung der entsprechenden Betriebsparameter BP1, BP2 selbstverständlich entfallen.

In einem Schritt S12 variiert die Recheneinheit 9 für den entsprechenden Betriebszustand Zi des entsprechenden Anlagenteils 1 die zweiten Betriebsparameter BP2 (aber selbstverständlich nicht die ersten Betriebsparameter BP1). Sie ermittelt dadurch den ersten Betriebsparametern BP1 dieses Betriebszustands Zi zugeordnete variierte zweite Betriebsparameter BP2'.

In der Regel führt die Recheneinheit 9 im Rahmen des Schrittes S12 die ersten Betriebsparameter BP1 und die zweiten Betriebsparameter BP2 bzw. die variierten zweiten Betriebsparameter BP2' einem Modell 11 (siehe FIG 3) des jeweiligen Anlagenteils 1 zu. Mittels des Modells 11 ermittelt die Recheneinheit 9 somit ein erwartetes Betriebsergebnis BE'. Durch Variieren der zweiten Betriebsparameter BP2 und jeweiliges Ermitteln der jeweils zugehörigen erwarteten Betriebsergebnisses BE' kann die Recheneinheit 9 somit optimierte zweite Betriebsparameter BP2' ermitteln. Die Recheneinheit 9 ermittelt die variierten zweiten Betriebsparameter BP2' also anhand des Modells 11 des jeweiligen ersten Anlagenteils 1 unter Berücksichtigung der ersten Betriebsparameter BP1 und/ oder der zweiten Betriebsparameter BP2, BP2' und des (erwarteten) Betriebsergebnisses BE'.

Im Rahmen der Implementierung des Schrittes S12 setzt die Recheneinheit 9 in der Regel zumindest die zweiten Betriebsparameter BP2, BP2' in eine Kostenfunktion Z ein. Der Begriff "Kostenfunktion" ist Fachleuten auf dem Gebiet der mathematischen Optimierung allgemein bekannt. Sodann variiert die Recheneinheit 9 im Rahmen des Schrittes S12 die zweiten Betriebsparameter BP2 und ermittelt dadurch diejenigen variierten zweiten Betriebsparameter BP2', bei denen das Optimum der Kostenfunktion Z erreicht wird.

Es ist möglich, dass die Recheneinheit 9 in die Kostenfunktion Z auch das erwartete Betriebsergebnis BE' einsetzt. Dies ist insbesondere dann sinnvoll, wenn für das Betriebsergebnis BE zwar ein optimaler Wert existiert, innerhalb gewisser Grenzen jedoch Abweichungen von diesem optimalen Wert zulässig sind. Alternativ oder zusätzlich ist es möglich, dass die Recheneinheit 9 im Rahmen der Optimierung der Kostenfunktion Z Randbedingungen RB berücksichtigt, die für das Betriebsergebnis BE eingehalten werden müssen. Beispielsweise kann gefordert sein, dass das Betriebsergebnis BE einen minimal zulässigen Wert nicht unterschreitet, einen maximal zulässigen Wert nicht überschreitet oder zwischen einem minimal zulässigen und einem maximal zulässigen Wert liegt.

Die von ihr ermittelten variierten zweiten Betriebsparameter BP2' übermittelt die Recheneinheit 9 in einem Schritt S13 an die Steuereinrichtung 5 des entsprechenden Anlagenteils 1 zurück. Gegebenenfalls können zusätzlich auch die zugehörigen ersten Betriebsparameter BP1 mit übermittelt werden. Die Übermittlung der variierten zweiten Betriebsparameter BP2' (soweit erforderlich, einschließlich der zugehörigen ersten Betriebsparameter BP1) von der Recheneinheit 9 an die jeweilige Steuereinrichtung 5 erfolgt ebenfalls über die Datenverbindung 10. Es ist weiterhin möglich, dass die Recheneinheit 9 die von ihr ermittelten variierten zweiten Betriebsparameter BP2' - zusätzlich zur Übermittlung an die entsprechende Steuereinrichtung 5 - intern abspeichert.

Die entsprechende Steuereinrichtung 5 nimmt die variierten zweiten Betriebsparameter BP2' (gegebenenfalls einschließlich der zugehörigen ersten Betriebsparameter BP1) in einem Schritt S5 (siehe FIG 5) entgegen. Die Steuereinrichtung 5 des entsprechenden ersten Anlagenteils 1 aktualisiert daraufhin in einem Schritt S6 die zweiten Betriebsparameter BP2 des entsprechenden Betriebszustands Zi. Insbesondere kann die Steuereinrichtung 5 die variierten zweiten Betriebsparameter BP2' im Rahmen des Schrittes S6 anstelle der zuvor gespeicherten zweiten Betriebsparameter BP2 des entsprechenden Betriebszustands Zi in der Liste von Betriebszuständen Zi abspeichern. Im Ergebnis wird durch den Schritt S6 somit erreicht, dass die Steuereinrichtung 5 des entsprechenden ersten Anlagenteils 1 ab der Übermittlung der variierten zweiten Betriebsparameter BP2' dann, wenn sich die ersten Betriebsparameter BP1 des entsprechenden Betriebszustands Zi einstellen, die zugehörigen variierten zweiten Betriebsparameter BP2' verwendet.

Das Ausgeben der zweiten Betriebsparameter BP2 an die gesteuerten Elemente des jeweiligen Anlagenteils 1 erfolgt entsprechend der Darstellung in FIG 7 in der Regel mit einem Steuertakt. Der Steuertakt liegt - auch wenn die Dauer des jeweiligen Betriebszustandes Zi oftmals im Minutenbereich liegt - in der Regel im Bereich einiger Millisekunden. In Ausnahmefällen kann er auch im Bereich bis zu einer Sekunde oder geringfügig darüber liegen. Je nach Anlagenteil 1 und je nach Betriebsergebnis BE kann die Erfassung ebenfalls mit dem Steuertakt erfolgen. Alternativ kann die Erfassung des Betriebsergebnisses BE mit einem ganzzahligen Vielfachen des Steuertaktes erfolgen. Im Einzelfall ist es sogar möglich, dass die Erfassung des Betriebsergebnisses BE nur am Ende des jeweiligen Betriebszustandes Zi erfolgt.

Es ist möglich, im Rahmen der erfindungsgemäßen Vorgehensweise nur einige der erfassten Betriebsergebnisse BE an die Recheneinheit zu übermitteln. Vorzugsweise wird jedoch entsprechend der Darstellung in FIG 7 die gesamte Sequenz der erfassten Betriebsergebnisse BE an die Recheneinheit 9 übermittelt.

Die Übermittlung der variierten zweiten Betriebsparameter BP2' (soweit erforderlich, einschließlich der zugehörigen ersten Betriebsparameter BP1) von der Recheneinheit 9 an die jeweilige Steuereinrichtung 5 erfolgt in der Regel in einem größeren Zeitabstand. Der Zeitabstand zwischen jeweils einer erneuten Übermittlung der variierten zweiten Betriebsparameter BP2' kann insbesondere zwischen mehreren Stunden und mehreren Monaten liegen. Beispielsweise kann der Zeitabstand zwischen 2 Tagen und 30 Tagen liegen. Insbesondere bei einem elektrostatischen Staubfilter 1f - prinzipiell aber auch bei einem anderen ersten Anlagenteil - kann der Zeitabstand besonders bevorzugt zwischen 5 Tagen und 10 Tagen liegen, insbesondere bei 6 bis 8 Tagen.

Es ist möglich, dass die Datenverbindung 10 zwischen der jeweiligen Steuereinrichtung 5 und der Recheneinheit 9 nicht permanent besteht. Beispielsweise kann die Datenverbindung 10 von vornherein nur zu bestimmten Zeitpunkten eingerichtet werden oder beispielsweise aufgrund von Störungen unterbrochen sein. Sofern eine kontinuierliche Übermittlung des Betriebsergebnisses BE nicht möglich ist, puffert die jeweilige Steuereinrichtung 5 des entsprechenden ersten Anlagenteils 1 daher die erfassten Betriebsergebnisse BE. Soweit erforderlich, wird die gleiche Vorgehensweise auch für die zugehörigen ersten und/oder zweiten Betriebsparameter BP1, BP2 ergriffen. Die Pufferung wird so lange beibehalten, bis eine Übermittlung an die Recheneinheit 9 erfolgt.

FIG 8 zeigt eine mögliche Implementierung der Schritte S5 und S6 von FIG 5. Gemäß FIG 8 nimmt die Steuereinrichtung 5 des jeweiligen Anlagenteils 1 analog zur Pufferung der Betriebsergebnisse BE an sie übermittelte variierte zweite Betriebsparameter BP2' zunächst in einem Schritt S21 entgegen und puffert sie. Dadurch kann insbesondere gewährleistet werden, dass die zweiten Betriebsparameter BP2' vollständig an die jeweilige Steuereinrichtung 5 übermittelt werden. Inkonsistenzen können dadurch vermieden werden. Vorzugsweise überprüft die Steuereinrichtung 5 des jeweiligen ersten Anlagenteils 1 weiterhin die gepufferten zweiten Betriebsparameter BP2' in einem Schritt S22 auf Plausibilität. Die Überprüfung kann entsprechend der Darstellung in FIG 8 insbesondere darin bestehen, dass geprüft wird, ob eine Abweichung der gepufferten zweiten Betriebsparameter BP2' von den (zuvor gültigen) zweiten Betriebsparametern BP2 innerhalb einer vordefinierten Schranke MAX liegt. Sofern die gepufferten zweiten Betriebsparameter BP2' die Plausibilitätsprüfung des Schrittes S22 bestehen, übernimmt die Steuereinrichtung 5 des jeweiligen ersten Anlagenteils 1 in einem Schritt S23 die gepufferten zweiten Betriebsparameter BP2' als neue zweite Betriebsparameter BP2. Anderenfalls verwirft die Steuereinrichtung 5 in einem Schritt S24 die gepufferten zweiten Betriebsparameter BP2'.

Wie eingangs erwähnt, weist die hüttentechnische Anlage mehrere Anlagenteile 1 auf, wobei eine Kopplung der verschiedenen Anlagenteile 1 miteinander bestehen kann. Die obenstehend erläuterte erfindungsgemäße Vorgehensweise ist selbstverständlich für jeden Anlagenteil 1 individuell - also losgelöst von den anderen Anlagenteilen 1 - ausführbar. Insbesondere ist sie entsprechend der Darstellung in FIG 3 parallel für mehrere Anlagenteile 1 ausführbar. Dargestellt ist dies in FIG 3 für zwei Anlagenteile 1. Die Steuereinrichtungen 5 der verschiedenen Anlagenteile 1 sind voneinander verschiedene Einrichtungen. Die Recheneinheit 9 zur Ermittlung der variierten zweiten Betriebsparameter BP2' kann prinzipiell
ebenfalls individuell für den jeweiligen Anlagenteil 1 sein. Vorzugsweise ist die Recheneinheit 9 jedoch für beide Anlagenteile 1 identisch. Es handelt sich also um dieselbe Recheneinheit 9. Eine individuelle Ermittlung der variierten zweiten Betriebsparameter BP2' ist stets möglich. Wenn jedoch die beiden Anlagenteile 1, wie in FIG 3 dargestellt, derart miteinander gekoppelt sind, dass ein Ausgangsprodukt A des einen Anlagenteils 1 ein Eingangsprodukt E des anderen Anlagenteils 1 ist, und weiterhin die Recheneinheit 9 für beide Anlagenteile 1 dieselbe Recheneinheit 9 ist, kann die Recheneinheit 9 insbesondere eine kombinierte Optimierung der zweiten Betriebsparameter BP2' für beide Anlagenteile 1 vornehmen. Diese Vorgehensweise kann auch auf mehr als zwei Anlagenteile 1 erweitert werden.

### Zusammengefasst betrifft die vorliegende Erfindung somit folgenden Sachverhalt:

Eine hüttentechnische Anlage weist mindestens einen Anlagenteil 1 auf. Der Anlagenteil 1 wird zu einem bestimmten Zeitpunkt mit ersten und zweiten Betriebsparametern BP1, BP2 betrieben. Aufgrund des Betriebs des Anlagenteils 1 entsprechend den ersten und zweiten Betriebsparametern BP1, BP2 stellt sich ein Betriebsergebnis BE ein. Das Betriebsergebnis BE wird erfasst. Zumindest das Betriebsergebnis BE wird von einer Steuereinrichtung 5 des ersten Anlagenteils 1 an eine Recheneinheit 9 übermittelt. Die Recheneinheit 9 variiert die zweiten Betriebsparameter BP2, nicht aber die ersten Betriebsparameter BP1 und ermittelt dadurch den ersten Betriebsparametern BP1 zugeordnete variierte zweite Betriebsparameter BP2'. Die Recheneinheit 9 übermittelt die variierten zweiten Betriebsparameter BP2' an die Steuereinrichtung 5 des ersten Anlagenteils 1 zurück. Die Steuereinrichtung 5 des ersten Anlagenteils 1 verwendet ab der Übermittlung der variierten zweiten Betriebsparameter BP2' dann, wenn sich die ersten Betriebsparameter BP1 einstellen, die variierten zweiten Betriebsparameter BP2'.

Die vorliegende Erfindung weist viele Vorteile auf. Insbesondere kann jederzeit ein nach Bedarf optimierter Betrieb der verschiedenen Anlagenteile 1 der hüttentechnischen Anlage gewährleistet werden. Weiterhin ist der Betrieb der erfindungsgemäß betriebenen Anlagenteile 1 jederzeit an geänderte Produktions- oder Marktverhältnisse anpassbar. Auch beliebige andere veränderliche Verhältnisse - beispielsweise das Wetter - können nach Bedarf berücksichtigt werden. Algorithmen zur Ermittlung der variierten zweiten Betriebsparameter BP2' können jederzeit nach Bedarf angepasst und nachgeführt werden. Auch eine anlagenteileübergreifende Optimierung ist jederzeit möglich. Es ist sogar möglich, Erfahrungen, die auf den Anlagenteilen einer anderen hüttentechnischen Anlage beruhen, in die Ermittlung der variierten zweiten Betriebsparameter BP2' einfließen zu lassen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Anlagenteile
- 1a bis 1f: konkrete Anlagenteile
- 2: Filterkammern
- 2': Stromversorgungseinrichtungen
- 3: staubbelastetes Abgas
- 4: gereinigtes Abgas
- 5: Steuereinrichtungen
- 6 bis 8: Sensoren
- 9: Recheneinheit
- 10: Datenverbindung
- 11: Modell eines Anlagenteils

- A: Ausgangsprodukt
- BE, BE': Betriebsergebnis
- BP1: erste Betriebsparameter
- BP2, BP2': zweite Betriebsparameter
- CON: Zustandsbedingung
- E: Eingangsprodukt
- G: Belastungsgrad
- Ij: Betriebsströme
- M: Mengenstrom
- MAX: vordefinierte Schranke
- R: Reinheitsgrad
- RB: Randbedingungen
- S1 bis S24: Schritte
- Uj: Betriebsspannungen
- Z: Kostenfunktion
- Zi, Zi': Betriebszustände

## Patentansprüche

1. Betriebsverfahren für eine hüttentechnische Anlage, die mindestens einen ersten Anlagenteil (1) aufweist,
- wobei innerhalb einer Steuereinrichtung (5) des ersten Anlagenteils (1) als verkettete oder unverkettete Liste eine Mehrzahl von Betriebszuständen (Zi) gespeichert ist,
- wobei der jeweilige Betriebszustand (Zi) durch jeweilige erste Betriebsparameter (BP1), zweite Betriebsparameter (BP2) und eine Zustandsbedingung (CON) definiert ist,
- wobei der erste Anlagenteil (1) nacheinander in einer Abfolge der Betriebszustände (Zi) betrieben wird,
- wobei die ersten Betriebsparameter (BP1) ohne Mitwirkung der Steuereinrichtung (5) des ersten Anlagenteils (1) eingestellt werden,
- wobei die Steuereinrichtung (5) des ersten Anlagenteils (1) zunächst den jeweiligen Betriebszustand (Zi) bestimmt und sodann den Anlagenteil (1) entsprechend den dem bestimmten Betriebszustand (Zi) zugeordneten zweiten Betriebsparametern (BP2) steuert,
- wobei ein sich aufgrund des Betriebs des ersten Anlagenteils (1) entsprechend den ersten und zweiten Betriebsparametern (BP1, BP2) einstellendes Betriebsergebnis (BE) erfasst wird,
- wobei zumindest das Betriebsergebnis (BE) von der Steuereinrichtung (5) des ersten Anlagenteils (1) an eine Recheneinheit (9) übermittelt wird,
- wobei die Recheneinheit (9) die zweiten Betriebsparameter (BP2), nicht aber die ersten Betriebsparameter (BP1) variiert und dadurch den ersten Betriebsparametern (BP1) zugeordnete variierte zweite Betriebsparameter (BP2') ermittelt,
- wobei die Recheneinheit (9) die variierten zweiten Betriebsparameter (BP2') an die Steuereinrichtung (5) des ersten Anlagenteils (1) zurück übermittelt und
- wobei die Steuereinrichtung (5) des ersten Anlagenteils (1) die variierten zweiten Betriebsparameter (BP2') anstelle der zuvor gespeicherten zweiten Betriebsparameter (BP2) des entsprechenden Betriebszustands (Zi) in der Liste von Betriebszuständen (Zi) abspeichert, so dass die Steuereinrichtung (5) des ersten Anlagenteils (1) ab der Übermittlung der variierten zweiten Betriebsparameter (BP2') dann, wenn sich die ersten Betriebsparameter (BP1) einstellen, die variierten zweiten Betriebsparameter (BP2') verwendet.

2. Betriebsverfahren nach Anspruch 1,
**dadurch gekennzeichnet,**
**dass** die Recheneinheit (9) die variierten zweiten Betriebsparameter (BP2') anhand eines Modells (11) des ersten Anlagenteils (1) unter Berücksichtigung der ersten Betriebsparameter (BP1) und/oder der zweiten Betriebsparameter (BP2) und des Betriebsergebnisses (BE) ermittelt.

3. Betriebsverfahren nach Anspruch 2,
**dadurch gekennzeichnet,**
**dass** der Recheneinheit (9) die ersten Betriebsparameter (BP1) und/oder die zweiten Betriebsparameter (BP2) a priori bekannt sind oder dass die ersten Betriebsparameter (BP1) und/oder die zweiten Betriebsparameter (BP2) von der Steuereinheit (5) des ersten Anlagenteils (1) an die Recheneinheit (9) übermittelt werden.

4. Betriebsverfahren nach Anspruch 2 oder 3,
**dadurch gekennzeichnet,**
**dass** die Recheneinheit (9) zumindest die zweiten Betriebsparameter (BP2) in eine Kostenfunktion (Z) einsetzt und die variierten zweiten Betriebsparameter (BP2') dadurch ermittelt, dass bei den variierten zweiten Betriebsparametern (BP2') ein Optimum der Kostenfunktion (Z) erreicht wird, dass die Recheneinheit (9) weiterhin durch Einsetzen der ersten und zweiten Betriebsparameter (BP1, BP2) in das Modell (11) ein zugehöriges erwartetes Betriebsergebnis (BE') ermittelt und dass die Recheneinheit (9) im Rahmen der Optimierung der Kostenfunktion (Z) für das Betriebsergebnis (BE) einzuhaltende Randbedingungen (RB) berücksichtigt und/oder auch das erwartete Betriebsergebnis (BE') in die Kostenfunktion (Z) einsetzt.

5. Betriebsverfahren nach einem der obigen Ansprüche,
**dadurch gekennzeichnet,**
**dass** die Steuereinrichtung (5) des ersten Anlagenteils (1) erfasste Betriebsergebnisse (BE) sowie, soweit erforderlich, die ersten und zweiten Betriebsparameter (BE1, BE2) puffert, bis eine Übermittlung an die Recheneinheit (9) erfolgt.

6. Betriebsverfahren nach einem der obigen Ansprüche,
**dadurch gekennzeichnet,**
**dass** die Steuereinrichtung (5) des ersten Anlagenteils (1) an sie übermittelte variierte zweite Betriebsparameter (BP2') zunächst entgegennimmt und puffert.

7. Betriebsverfahren nach Anspruch 6,
**dadurch gekennzeichnet,**
**dass** die Steuereinrichtung (5) des ersten Anlagenteils (1) die gepufferten zweiten Betriebsparameter (BP2') auf Plausibilität überprüft und dass die Steuereinrichtung (5) des ersten Anlagenteils (1) die gepufferten zweiten Betriebsparameter (BP2') als neue zweite Betriebsparameter (BP2) übernimmt, sofern die gepufferten zweiten Betriebsparameter (BP2') die Plausibilitätsprüfung bestehen, und die gepufferten zweiten Betriebsparameter (BP2') anderenfalls verwirft.

8. Betriebsverfahren nach Anspruch 7,
**dadurch gekennzeichnet,**
**dass** die Plausibilitätsprüfung darin besteht, dass geprüft wird, ob eine Abweichung der gepufferten zweiten Betriebsparameter (BP2') von den zweiten Betriebsparametern (BP2) innerhalb einer vordefinierten Schranke (MAX) liegt.

9. Betriebsverfahren nach einem der obigen Ansprüche,
**dadurch gekennzeichnet,**
**dass** die gesamte Sequenz der erfassten Betriebsergebnisse (BE) an die Recheneinheit (9) übermittelt wird.

10. Betriebsverfahren nach einem der obigen Ansprüche,
**dadurch gekennzeichnet,**
**dass** die Steuereinrichtung (5) mit einem Steuertakt jeweils die jeweils aktuellen zweiten Betriebsparameter (BP2) an gesteuerte Elemente des ersten Anlagenteils (1) ausgibt und dass die Steuereinrichtung (5) des ersten Anlagenteils (1) mit dem Steuertakt oder einem ganzzahligen Vielfachen des Steuertaktes zumindest das Betriebsergebnis (BE) erfasst.

11. Betriebsverfahren nach einem der obigen Ansprüche,
**dadurch gekennzeichnet,**
**dass** die Übermittlung der Betriebsergebnisse (BE) und, soweit erforderlich, der ersten und/oder zweiten Betriebsparameter (BP1, BP2) an die Recheneinheit (9) kontinuierlich erfolgt und dass die Übermittlung der variierten zweiten Betriebsparameter (BP2') an die Steuereinrichtung (5) des ersten Anlagenteils (1) in einem größeren Zeitabstand erfolgt.

12. Betriebsverfahren nach Anspruch 11,
**dadurch gekennzeichnet,**
**dass** der Zeitabstand zwischen jeweils einer erneuten Übermittlung der variierten zweiten Betriebsparameter (BP2') zwischen mehreren Stunden und mehreren Monaten liegt, beispielsweise zwischen 2 Tagen und 30 Tagen, vorzugsweise zwischen 5 Tagen und 10 Tagen, insbesondere bei 6 bis 8 Tagen.

13. Betriebsverfahren nach einem der obigen Ansprüche,
**dadurch gekennzeichnet,**
**dass** die Steuereinrichtung (5) des ersten Anlagenteils (1) und die Recheneinheit (9) über eine nicht proprietäre universelle Datenverbindung (10) miteinander kommunizieren.

14. Betriebsverfahren nach einem der obigen Ansprüche,
**dadurch gekennzeichnet,**
**dass** der erste Anlagenteil (1) ein elektrostatischer Staubfilter (1f) mit mehreren hintereinandergeschalteten Filterkammern (2) ist, dass dem elektrostatischen Staubfilter (1f) ein staubbelastetes Abgas (3) zugeführt wird, das in den Filterkammern (2) entstaubt wird und als gereinigtes Abgas (4) vom elektrostatischen Staubfilter (2) abgegeben wird, dass der erste Betriebsparameter (BP1) entweder der Betriebszustand (Zi') eines dem elektrostatischen Staubfilter (1f) vorgeordneten Aggregats (1b, 1c, 1d) oder ein Mengenstrom (M) und/oder Belastungsgrad (G) des dem elektrostatischen Staubfilter (1f) zugeführten staubbelasteten Abgases (3) ist, dass die zweiten Betriebsparameter (BP2) elektrische Größen (Uj, Ij) der einzelnen Filterkammern (2) des elektrostatischen Staubfilters (1f) sind und dass das Betriebsergebnis (BE) der Reinheitsgrad (R) des gereinigten Abgases (4) ist.

15. Betriebsverfahren nach einem der obigen Ansprüche,
**dadurch gekennzeichnet,**
**dass** zusätzlich ein Betriebsverfahren nach einem der obigen Ansprüche auch für einen zweiten Anlagenteil (1) der hüttentechnischen Anlage durchgeführt wird, dass der erste und der zweite Anlagenteil (1) derart miteinander gekoppelt sind, dass ein Ausgangsprodukt (A) des ersten Anlagenteils (1) ein Eingangsprodukt (E) des zweiten Anlagenteils (1) ist, dass die Steuereinrichtung (5) des zweiten Anlagenteils (1) eine von der Steuereinrichtung (5) des ersten Anlagenteils (1) verschiedene Einrichtung ist und dass die Recheneinheit (9) zur Ermittlung der variierten zweiten Betriebsparameter (BP2') für den ersten Anlagenteil (1) mit der Recheneinheit (9) zur Ermittlung der variierten zweiten Betriebsparameter (BP2') für den zweiten Anlagenteil (1) identisch ist.

## Claims

1. Operating method for a metallurgical plant comprising at least one first plant part (1),
- wherein a plurality of operating states (Zi) is stored within a control unit (5) of the first plant part (1) as a concatenated or unconcatenated list,
- wherein the particular operating state (Zi) is defined by particular first operating parameters (BP1), second operating parameters (BP2), and a state condition (CON),
- wherein the first plant part (1) is operated in succession in a sequence of operating states (Zi),
- wherein the first operating parameters (BP1) are adjusted without assistance from the control unit (5) of the first plant part (1),
- wherein the control unit (5) of the first plant part (1) initially determines the particular operating state (Zi) and then controls the plant part (1) according to the second operating parameters (BP2) assigned to the determined operating state (Zi),
- wherein an operating result (BE), which was established on the basis of the operation of the first plant part (1) according to the first and second operating parameters (BP1, BP2), is recorded,
- wherein at least the operating result (BE) is transmitted from the control unit (5) of the first plant part (1) to a computing unit (9),
- wherein the computing unit (9) varies the second operating parameters (BP2), but not the first operating parameters (BP1), and thereby determines varied second operating parameters (BP2') associated with the first operating parameters (BP1),
- wherein the computing unit (9) transmits the varied second operating parameters (BP2') back to the control unit (5) of the first plant part (1), and
- wherein the control unit (5) of the first plant part (1) stores the varied second operating parameters (BP2') instead of the previously stored second operating parameters (BP2) of the corresponding operating state (Zi) in the list of operating states (Zi), and therefore the control unit (5) of the first plant part (1) uses the varied second operating parameters (BP2'), after the transmission of the varied second operating parameters (BP2'), when the first operating parameters (BP1) are established.

2. Operating method according to Claim 1,
**characterized in that**
the computing unit (9) determines the varied second operating parameters (BP2') on the basis of a model (11) of the first plant part (1) with consideration for the first operating parameters (BP1) and/or the second operating parameters (BP2) and with consideration for the operating result (BE).

3. Operating method according to Claim 2,
**characterized in that**
the first operating parameters (BP1) and/or the second operating parameters (BP2) are a *priori* known to the computing unit (9), or the first operating parameters (BP1) and/or the second operating parameters (BP2) are transmitted from the control unit (5) of the first plant part (1) to the computing unit (9).

4. Operating method according to Claim 2 or 3,
**characterized in that**
the computing unit (9) applies at least the second operating parameters (BP2) in a cost function (Z) and determines the varied second operating parameters (BP2') by way of an optimum of the cost function (Z) being reached with respect to the varied second operating parameters (BP2'), the computing unit (9) further applies the first and second operating parameters (BP1, BP2) in the model (11) and determines an associated expected operating result (BE'), and, within the scope of the optimization of the cost function (Z), the computing unit (9) accounts for constraints (RB) to be met for the operating result (BE) and/or applies the expected operating result (BE') in the cost function (Z).

5. Operating method according to one of the preceding claims, **characterized in that**
the control unit (5) of the first plant part (1) buffers the recorded operating results (BE) and, if necessary, the first and second operating parameters (BE1, BE2), until a transmission to the computing unit (9) takes place.

6. Operating method according to one of the preceding claims, **characterized in that**
the control unit (5) of the first plant part (1) initially receives varied second operating parameters (BP2') transmitted thereto and buffers said parameters.

7. Operating method according to Claim 6,
**characterized in that**
the control unit (5) of the first plant part (1) checks the buffered second operating parameters (BP2') for plausibility, and the control unit (5) of the first plant part (1) applies the buffered second operating parameters (BP2') as new second operating parameters (BP2) provided the buffered second operating parameters (BP2') pass the plausibility check, and otherwise discards the buffered second operating parameters (BP2').

8. Operating method according to Claim 7,
**characterized in that**
the plausibility check consists of checking to determine whether a deviation of the buffered second operating parameters (BP2') from the second operating parameters (BP2) lies within a predefined boundary (MAX).

9. Operating method according to one of the preceding claims,
**characterized in that**
the entire sequence of the recorded operating results (BE) is transmitted to the computing unit (9).

10. Operating method according to one of the preceding claims, **characterized in that**
the control unit (5) outputs the particular current second operating parameters (BP2) to controlled elements of the first plant part (1) with a control pulse in each case, and the control unit (5) of the first plant part (1) records at least the operating result (BE) with the control pulse or a whole-number multiple of the control pulse.

11. Operating method according to one of the preceding claims,
**characterized in that**
the transmission of the operating results (BE) and, if necessary, the first and/or second operating parameters (BP1, BP2) to the computing unit (9) takes place continuously, and the transmission of the varied second operating parameters (BP2') to the control unit (5) of the first plant part (1) takes place in a longer time interval.

12. Operating method according to Claim 11,
**characterized in that**
the time interval between each re-transmission of the varied second operating parameters (BP2') is between several hours and several months, for example, between 2 days and 30 days, preferably between 5 days and 10 days, in particular, 6 days to 8 days.

13. Operating method according to one of the preceding claims,
**characterized in that**
the control unit (5) of the first plant part (1) and the computing unit (9) communicate with one another via a non-proprietary universal data link (10).

14. Operating method according to one of the preceding claims,
**characterized in that** the first plant part (1) is an electrostatic dust filter (1f) comprising several successively connected filter chambers (2), a dust-laden exhaust gas (3) is fed to the electrostatic dust filter (1f), is dedusted in the filter chambers (2) and is given off by the electrostatic dust filter (2) as purified exhaust gas (4),
the first operating parameter (BP1) is either the operating state (Zi') of an assembly (1b, 1c, 1d) upstream from the electrostatic dust filter (1f) or a volumetric flow (M) and/or extent of loading (G) of the dust-laden exhaust gas (3) fed to the electrostatic dust filter (1f), the second operating parameters (BP2) are electrical quantities (Uj, Ij) of the individual filter chambers (2) of the electrostatic dust filter (1f), and the operating result (BE) is the purity level (R) of the purified exhaust gas (4).

15. Operating method according to one of the preceding claims,
**characterized in that**
in addition, an operating method according to one of the preceding claims is also carried out for a second plant part (1) of the metallurgical plant, the first and the second plant part (1) are coupled to each other in such a way that an output product (A) of the first plant part (1) is an input product (E) of the second plant part (1), the control unit (5) of the second plant part (1) is a different unit than the control unit (5) of the first plant part (1), and the computing unit (9) for determining the varied second operating parameters (BP2') for the first plant part (1) is identical to the computing unit (9) for determining the varied second operating parameters (BP2') for the second plant part (1).

## Revendications

1. Procédé de fonctionnement pour une installation sidérurgique qui comprend au moins une première partie d'installation (1),
- dans lequel une pluralité d'états de fonctionnement (Zi) est stockée sous forme de liste concaténée ou non concaténée à l'intérieur d'un dispositif de commande (5) de la première partie d'installation (1),
- dans lequel l'état de fonctionnement (Zi) respectif est défini par des premiers paramètres de fonctionnement (BP1) respectifs, des deuxièmes paramètres de fonctionnement (BP2) respectifs et une condition d'état (CON),
- dans lequel la première partie d'installation (1) est mise en fonctionnement successivement dans une série des états de fonctionnement (Zi),
- dans lequel les premiers paramètres de fonctionnement (BP1) sont ajustés sans implication du dispositif de commande (5) de la première partie d'installation (1),
- dans lequel le dispositif de commande (5) de la première partie d'installation (1) détermine tout d'abord l'état de fonctionnement (Zi) respectif et commande ensuite la partie d'installation (1) correspondant aux deuxièmes paramètres de fonctionnement (BP2) associés à l'état de fonctionnement (Zi) déterminé,
- dans lequel est enregistré un résultat de fonctionnement (BE) s'ajustant sur la base du fonctionnement de la première partie d'installation (1) correspondant aux premiers et deuxièmes paramètres de fonctionnement (BP1, BP2),
- dans lequel au moins le résultat de fonctionnement (BE) est transmis par le dispositif de commande (5) de la première partie d'installation (1) à une unité de calcul (9),
- dans lequel l'unité de calcul (9) fait varier les deuxièmes paramètres de fonctionnement (BP2), mais pas les premiers paramètres de fonctionnement (BP1), et détermine ainsi les deuxièmes paramètres de fonctionnement qui ont varié (BP2') associés aux premiers paramètres de fonctionnement (BP1),
- dans lequel l'unité de calcul (9) retransmet les deuxièmes paramètres de fonctionnement qui ont varié (BP2') au dispositif de commande (5) de la première partie d'installation (1) et
- dans lequel le dispositif de commande (5) de la première partie d'installation (1) met en mémoire les deuxièmes paramètres de fonctionnement qui ont varié (BP2') à la place des deuxièmes paramètres de fonctionnement (BP2) stockés auparavant de l'état de fonctionnement (Zi) correspondant dans la liste d'états de fonctionnement (Zi), de telle sorte que le dispositif de commande (5) de la première partie d'installation (1) utilise les deuxièmes paramètres de fonctionnement qui ont varié (BP2') à partir de la transmission des deuxièmes paramètres de fonctionnement qui ont varié (BP2'), si les premiers paramètres de fonctionnement (BP1) s'ajustent.

2. Procédé de fonctionnement selon la revendication 1, **caractérisé en ce que** l'unité de calcul (9) détermine les deuxièmes paramètres de fonctionnement qui ont varié (BP2') à l'aide d'un modèle (11) de la première partie d'installation (1) en prenant en compte les premiers paramètres de fonctionnement (BP1) et/ou les deuxièmes paramètres de fonctionnement (BP2) et le résultat de fonctionnement (BE).

3. Procédé de fonctionnement selon la revendication 2, **caractérisé en ce que** les premiers paramètres de fonctionnement (BP1) et/ou les deuxièmes paramètres de fonctionnement (BP2) sont a priori connus de l'unité de calcul (9) ou **en ce que** les premiers paramètres de fonctionnement (BP1) et/ou les deuxièmes paramètres de fonctionnement (BP2) sont transmis par l'unité de commande (5) de la première partie d'installation (1) à l'unité de calcul (9).

4. Procédé de fonctionnement selon la revendication 2 ou la revendication 3,
**caractérisé en ce que** l'unité de calcul (9) utilise au moins les deuxièmes paramètres de fonctionnement (BP2) dans une fonction de coût (Z) et détermine ainsi les deuxièmes paramètres de fonctionnement qui ont varié (BP2'), **en ce qu'**un optimum de la fonction de coût (Z) est atteint pour les deuxièmes paramètres de fonctionnement qui ont varié (BP2'), **en ce que** l'unité de calcul (9) détermine en outre un résultat de fonctionnement attendu (BE') associé en utilisant les premiers et deuxièmes paramètres de fonctionnement (BP1, BP2) dans le modèle (11) et **en ce que** l'unité de calcul (9) prend en compte des conditions marginales (RB) à respecter dans le cadre de l'optimisation de la fonction de coût (Z) pour le résultat de fonctionnement (BE) et/ou utilise également le résultat de fonctionnement attendu (BE') dans la fonction de coût (Z).

5. Procédé de fonctionnement selon l'une des revendications précédentes,
**caractérisé en ce que** le dispositif de commande (5) de la première partie d'installation (1) met en tampon des résultats de fonctionnement (BE) enregistrés ainsi que, s'il y a lieu, les premiers et deuxièmes paramètres de fonctionnement (BE1, BE2), jusqu'à ce que s'effectue une transmission à l'unité de calcul (9).

6. Procédé de fonctionnement selon l'une des revendications précédentes,
**caractérisé en ce que** le dispositif de commande (5) de la première partie d'installation (1) tout d'abord reçoit et met en tampon des deuxièmes paramètres de fonctionnement qui ont varié (BP2') transmis à celui-ci.

7. Procédé de fonctionnement selon la revendication 6,
**caractérisé en ce que** le dispositif de commande (5) de la première partie d'installation (1) teste la plausibilité des deuxièmes paramètres de fonctionnement mis en tampon (BP2') et **en ce que** le dispositif de commande (5) de la première partie d'installation (1) adopte les deuxièmes paramètres de fonctionnement mis en tampon (BP2') en tant que nouveaux deuxièmes paramètres de fonctionnement (BP2), pour autant que les deuxièmes paramètres de fonctionnement mis en tampon (BP2') réussissent le test de plausibilité, et dans le cas contraire rejette les deuxièmes paramètres de fonctionnement mis en tampon (BP2').

8. Procédé de fonctionnement selon la revendication 7,
**caractérisé en ce que** le test de plausibilité consiste **en ce qu'**il est vérifié s'il existe un écart entre les deuxièmes paramètres de fonctionnement mis en tampon (BP2') et les deuxièmes paramètres de fonctionnement (BP2) à l'intérieur d'une barrière prédéfinie (MAX).

9. Procédé de fonctionnement selon l'une des revendications précédentes,
**caractérisé en ce que** la séquence entière des résultats de fonctionnement (BE) enregistrés est transmise à l'unité de calcul (9).

10. Procédé de fonctionnement selon l'une des revendications précédentes,
**caractérisé en ce que** le dispositif de commande (5) émet avec un acte de commande respectivement les deuxièmes paramètres de fonctionnement (BP2) respectivement actuels vers des éléments commandés de la première partie d'installation (1) et **en ce que** le dispositif de commande (5) de la première partie d'installation (1) enregistre avec l'acte de commande ou un multiple entier de l'acte de commande au moins le résultat de fonctionnement (BE).

11. Procédé de fonctionnement selon l'une des revendications précédentes,
**caractérisé en ce que** la transmission des résultats de fonctionnement (BE) et, s'il y a lieu, des premiers et/ou deuxièmes paramètres de fonctionnement (BP1, BP2) à l'unité de calcul (9) s'effectue en continu et **en ce que** la transmission des deuxièmes paramètres de fonctionnement qui ont varié (BP2') au dispositif de commande (5) de la première partie d'installation (1) s'effectue sur un plus grand intervalle de temps.

12. Procédé de fonctionnement selon la revendication 11,
**caractérisé en ce que** l'intervalle de temps entre respectivement une nouvelle transmission des deuxièmes paramètres de fonctionnement qui ont varié (BP2') se situe entre plusieurs heures et plusieurs mois, par exemple entre 2 jours et 30 jours, de préférence entre 5 jours et 10 jours, en particulier de 6 à 8 jours.

13. Procédé de fonctionnement selon l'une des revendications précédentes,
**caractérisé en ce que** le dispositif de commande (5) de la première partie d'installation (1) et l'unité de calcul (9) communiquent l'un avec l'autre par l'intermédiaire d'une liaison de données universelle non propriétaire (10).

14. Procédé de fonctionnement selon l'une des revendications précédentes,
**caractérisé en ce que** la première partie d'installation (1) est un filtre à poussière électrostatique (1f) avec plusieurs chambres de filtre (2) montées en série, **en ce qu'**un gaz d'échappement chargé en poussière (3) est introduit dans le filtre à poussière électrostatique (1f), lequel gaz est dépoussiéré dans les chambres de filtre (2) et est distribué sous forme de gaz d'échappement purifié (4) par le filtre à poussière électrostatique (2), **en ce que** le premier paramètre de fonctionnement (BP1) est soit l'état de fonctionnement (Zi') d'un agrégat (1b, 1c, 1d) disposé en amont du filtre à poussière électrostatique (1f), soit un courant massique (M) et/ou un degré de charge (G) du gaz d'échappement chargé en poussière (3) introduit dans le filtre à poussière électrostatique (1f), **en ce que** les deuxièmes paramètres de fonctionnement (BP2) sont des grandeurs électriques (Uj, Ij) des chambres de filtre individuelles (2) du filtre à poussière électrostatique (1f) et **en ce que** le résultat de fonctionnement (BE) est le degré de pureté (R) du gaz d'échappement purifié (4).

15. Procédé de fonctionnement selon l'une des revendications précédentes,
**caractérisé en ce qu'**en sus, un procédé de fonctionnement selon l'une des revendications précédentes est également mis en œuvre pour une deuxième partie d'installation (1) de l'installation sidérurgique, **en ce que** la première et la deuxième partie d'installation (1) sont accouplées l'une à l'autre de telle sorte qu'un produit de sortie (A) de la première partie d'installation (1) soit un produit d'entrée (E) de la deuxième partie d'installation (1), **en ce que** le dispositif de commande (5) de la deuxième partie d'installation (1) est un dispositif différent du dispositif de commande (5) de la première partie d'installation (1) et **en ce que** l'unité de calcul (9) pour la détermination des deuxièmes paramètres de fonctionnement qui ont varié (BP2') pour la première partie d'installation (1) est identique à l'unité de calcul (9) pour la détermination des deuxièmes paramètres de fonctionnement qui ont varié (BP2') pour la deuxième partie d'installation (1).
